# EUROPÄISCHE PATENTSCHRIFT

(11) **EP 2 217 805 B1**
(45) Veröffentlichungstag und Bekanntmachung des Hinweises auf die Patenterteilung: **14.03.2012**
(21) Anmeldenummer: 08861822.8
(22) Anmeldetag: 04.12.2008
(51) Int. Cl.: F03D 7/02, F03D 9/00

(54) **STEUEREINRICHTUNG FÜR WINDENERGIEANLAGEN MIT NETZAUSFALLERKENNUNG**
CONTROL DEVICE FOR WIND POWER SYSTEMS HAVING POWER FAILURE DETECTION
DISPOSITIF DE COMMANDE POUR DES INSTALLATIONS ÉOLIENNES COMPORTANT UN SYSTÈME DE DÉTECTION DE PANNE DE SECTEUR

(30) Priorität: 14.12.2007 DE 102007060958
(43) Veröffentlichungstag der Anmeldung: 18.08.2010
(73) Patentinhaber: REpower Systems SE, 22297 Hamburg (DE)
(72) Erfinder: KRÜGER, Thomas, 24784 Westerrönfeld (DE)
(74) Vertreter: Glawe, Delfs, Moll
(86) Internationale Anmeldenummer: PCT/EP2008/010312
(87) Internationale Veröffentlichungsnummer: WO 2009/077089

(56) Entgegenhaltungen:
- DE-A1-102005 029 000
- US-A- 5 798 632
- US-A- 6 137 187
- US-A1- 2003 151 259

## Beschreibung

Die Erfindung betrifft eine Steuereinrichtung für Windenergieanlagen mit einem Windrotor und einem davon angetriebenen Generator, wobei der Generator von dem Windrotor angetrieben ist, und die Steuereinrichtung eine Drehmomentsteuereinheit für das Drehmoment des Generators aufweist.

Moderne Windenergieanlagen sind beinahe ausschließlich drehzahlvariabel ausgeführt. Das bedeutet, dass der Windrotor, welcher meist über ein Getriebe den Generator antreibt, mit unterschiedlicher Drehzahl in Abhängigkeit von den Windbedingungen betrieben werden kann. Dazu ist am Windrotor eine Möglichkeit vorgesehen, um den Anstellwinkel der Rotorblätter zu verändern. Durch Verändern des Anstellwinkels (Pitch) wird die von dem Windrotor aus dem Wind entnommene Windleistung verändert. Entsprechend wird durch die Drehmomentsteuereinheit das Drehmoment des Generators und damit die abgegebene elektrische Leistung verändert. Eine übliche Regelung sieht meist vor, dass die Pitch-Steuereinheit und die Drehmomentsteuereinheit angeschlossen sind an ein übergeordnetes Betriebspunktmodul, welches Sollwertvorgaben für die Pitch- und Drehzahlsteuereinheit bestimmt und an diese anlegt.

Die Steuereinrichtung kann so ausgelegt sein, dass die Pitch-Steuereinheit sowie die Drehmoment-Steuereinheit unabhängig voneinander sind (US 6 137 187). Es kann aber auch vorgesehen sein, dass die beiden Steuerungseinheiten miteinander verknüpft sind (DE 10 2005 029 000), so dass mit der Verknüpfung eine signifikante Verbesserung des Übergangsverhaltens zwischen Teil- und Vollastbetrieb der Windenergieanlage erreicht werden kann.

Treten im Betrieb Netzstörungen auf, insbesondere kurze Spannungseinbrüche durch Kurzschluss, so sind davon auch drehzahlvariable Windenergieanlagen betroffen. Herkömmlicherweise trennen sich die WEA vom Netz, wodurch weniger Leistung im Netz zur Verfügung steht. Im Kurzschlussfall ist dies kontraproduktiv. Es wird deshalb angestrebt, die WEA zumindest bei kurzen Spannungseinbrüchen am Netz zu halten, so dass am Ende des Spannungseinbruchs möglichst schnell wieder Leistung von der WEA in das Netz eingespeist werden kann. Dieser Aspekt des Verbleibens der Windenergieanlage am Netz während der Dauer des Spannungseinbruchs wird als "low voltage ride through" bezeichnet.

Aufgrund der schnellen Änderungen des elektrischen Netzparameters beim Zusammenbruch des Netzes kommt es zu entsprechenden, hochdynamischen Auswirkungen auf die WEA und ihren Triebstrang. Es entstehen dort Schwingungen. Diese zu Beginn des Netzeinbruchs entstehenden Schwingungen werden in der Praxis am Ende des Netzeinbruchs, also bei Wiederkehr der Spannung, weiter angeregt. Dabei können Drehmomentspitzen auftreten, welche über dem doppelten Nennmoment liegen. Es besteht damit Bruchgefahr für den Triebstrang der Windenergieanlage und Beschädigungsgefahr für die Umgebung. Eine bekannte Abhilfe liegt darin, den mechanischen Triebstrang entsprechend überzudimensionieren. Dies hat aber den Nachteil, dass die Herstellungskosten der WEA deutlich erhöht werden.

Ausgehend von dem zuletzt genannten Stand der Technik liegt der Erfindung die Aufgabe zugrunde, eine Verbesserung des Verhaltens der Windenergieanlage am Netz bei temporären Spannungseinbrüchen ("low voltage ride through") zu verbessern.

Die erfindungsgemäße Lösung liegt in den Merkmalen der unabhängigen Ansprüche. Vorteilhafte Weiterbildungen sind Gegenstand der abhängigen Ansprüche.

Bei einer Steuereinrichtung für Windenergieanlagen mit einem Windrotor und einem Generator, der von dem Windrotor drehzahlvariabel angetrieben ist, die eine Pitch-Steuerungseinheit für die Drehzahl des Windrotors und eine Drehmomentsteuereinheit für das Drehmoment des Generators aufweist, ist erfindungsgemäß vorgesehen ein Detektor zum Erkennen eines Netzeinbruchs und dessen Endes, ein Drehmomentgeber, der einen Vorgabewert für ein Drehmoment des Generators nach Erkennen des Netzeinbruchs bereitstellt, und ein Initialisator, welcher eine Komponente der Drehmomentsteuereinheit nach Erkennen des Netzeinbruchs auf den Vorgabewert initialisiert.

Kern der Erfindung ist der Gedanke, die Drehmomentsteuereinheit zum Ende des Spannungseinbruchs zwangsmäßig auf einen bestimmten Wert zu setzen. Dies kann geschehen, indem der Integratorzustand auf einen Wert identisch Null gesetzt wird. Damit wird erreicht, dass die Drehmomentsteuereinheit sich dank der Initialisierung auf einem Wert befindet, der weit weg von eventuellen Sättigungsgrenzen der Steuereinheit, insbesondere von in ihr implementierten Reglern, liegt. Die Erfindung hat erkannt, dass bei herkömmlicher Weise verwendeten Regeleinrichtungen die Gefahr bestand, dass sie zum Ende des Netzeinbruchs in die Sättigung liefen, weil das tatsächlich auftretende Ist-Moment während der Dauer des Netzeinbruchs stark von den ursprünglich vorgesehenen Sollwerten abwich. Die Regler konnten dann nicht mehr feinfühlig genug auf das Ende des Netzeinbruchs reagieren. Die Erfindung hat erkannt, dass sich diese negativen Folgen vermeiden lassen, indem das "Gedächtnis" der Steuereinrichtung gelöscht wird. Sie erreicht dies durch das Initialisieren. Damit besteht Gewähr dafür, dass am Ende des Netzeinbruchs eine Sättigung verhindert ist und damit die Steuereinrichtung über ausreichend Stellreserve verfügt. Mit der Initialisierung kann sie auf einen Startwert gesetzt werden, der eine optimale Dämpfung der Triebstrangschwingungen bewirkt. Die Erfindung erreicht bei geringem Aufwand ein frappierend gutes Ergebnis in Bezug auf die Schwingungsdämpfung.

Nachfolgend werden zuerst einige verwendete Begriffe erläutert:
Unter Initialisieren wird verstanden, den Sollwert einer Steuereinheit auf einen bestimmten Wert zu setzen. Vorangegangene Abweichungen verlieren ihre Wirkung. Die Historie der Steuereinrichtung wird damit sozusagen gelöscht.

Unter einer Steuereinheit wird eine Einrichtung verstanden, welche eine Steuergröße in Abhängigkeit von mindestens einem Eingangsparameter steuert oder regelt. Es ist also ein erweitertes Begriffsverständnis zu Grunde zu legen, welches auch eine Regeleinrichtung umfasst.

Unter einem I-Glied der Steuereinheit ist eine Komponente zu verstehen, welche für stationäre Genauigkeit sorgt. Ein Beispiel hierfür ist ein klassischer PI- oder PID-Regler mit seinem I-Glied. Der Begriff "I-Glied" ist hierauf aber nicht beschränkt, sondern umfasst auch für stationäre Genauigkeit sorgende Komponenten anderer Regelkonzepte, wie Zustandsregler oder Fuzzy-Regelungen. Unter Wiederkehr der Netzspannung wird im Rahmen der Erfindung verstanden, dass die Netzspannung auf eine einstellbare Schwellspannung angestiegen ist, die im stationären Betrieb zulässig ist (in der Regel etwa 90% der Nennspannung).

Besonders bevorzugt ist es, wenn es ein I-Glied ist, das initialisiert wird. Das I-Glied ist diejenige Komponente der Steuereinheit, welche für stationäre Genauigkeit sorgt. Darauf kommt es im Rahmen der Erfindung aber gar nicht an, sondern im Gegenteil dient das Einwirken auf das I-Glied der Verbesserung der Reglerdynamik. Überraschenderweise erreicht die Erfindung durch die gezielte Beeinflussung der Komponente für die stationäre Genauigkeit, nämlich des I-Glieds, eine Verbesserung der Dynamik, und zwar durch eine viel geringere Belastung des Triebstrangs bei Wiederkehr des Netzes. Paradoxerweise ist es gerade das Einwirken auf das I-Glied, welches für eine Verbesserung des dynamischen Verhaltens sorgt.

Dieser positive Einfluss des Einwirkens auf das I-Glied kann dadurch erhöht werden, indem der Initialisator weiter einen Gewichtungsfaktor der Komponente in der Drehmomentsteuereinheit ändert. Der Initialisator wirkt also nicht nur auf die Komponente ein, sondern erhöht auch ihre Gewichtung innerhalb der Drehmomentsteuereinheit. Ist die Komponente das I-Glied, so bedeutet dies, dass sich ihr Gewichtungsfaktor verändert, vorzugsweise erhöht wird. Bei einer Weiterbildung kann der Initialisator mindestens einen weiteren Gewichtungsfaktor einer anderen Komponente verändern. Hierbei kann es sich beispielsweise um ein P-Glied eines PI-Reglers bzw. einer äquivalenten Funktionseinheit bei einem anderen Regelkonzept handeln. Vorzugsweise erfolgt die Veränderung dieses Gewichtungsfaktors gegensinnig zu der Veränderung des Gewichtungsfaktors am I-Glied. Die Veränderung der Gewichtungsfaktoren ist zweckmäßigerweise nicht von Dauer, sondern temporär über einen einstellbaren Zeitraum. Damit kann die Veränderung der Gewichtungsfaktoren auf den Zeitraum begrenzt werden, der zum Abklingen der Schwingungen im Triebstrang benötigt wird.

Weiter ist der Initialisator vorzugsweise dazu ausgebildet, einen geänderten Einstellpunkt für eine Drehzahl an die Pitch-Steuereinheit und/oder Drehmomentsteuereinheit auszugeben. Damit ist es ermöglicht, zum Ende des Spannungseinbruchs die Drehzahlvorgabe zu ändern, insbesondere zu erhöhen. Es hat sich gezeigt, dass mit einer Änderung, insbesondere einer Erhöhung, des Drehzahl-Einstellpunkts die Steuereinheiten für das Drehmoment bzw. den Pitch noch besser vor einer Sättigung bewahrt werden können. Demgegenüber kommt es bei herkömmlichen Reglerkonzepten häufig dazu, dass bei unveränderter Drehzahlvorgabe die jeweiligen Regler in die Sättigung laufen, also an ihre Reglergrenzen kommen, wodurch dann die Regeldynamik zumindest zeitweilig verloren geht. Besonders bewährt hat es sich, den Drehzahlwert höher zu setzen, als es an sich der jeweiligen Betriebssituation entspräche, beispielsweise um 5% oder - bei Teillast - auf die Nenndrehzahl. Hierbei kann weiter vorgesehen sein, dass die Einstellpunkte für die Pitch-Steuereinheit und die Drehmomentsteuereinheit verschieden gewählt sein können. Im Rahmen der Erfindung ist es besonders günstig, nur den Einstellpunkt für die Drehmomentsteuereinheit zu verändern.

Gemäß einer weiteren vorteilhaften Ausführungsform ist ein Vorfilter für einen Sollwerteingang der Drehmomentsteuereinheit vorgesehen, an welchem ein Einstellpunkt für die Drehzahl als Eingang angelegt ist. Damit ergibt sich die Möglichkeit, bei einer Änderung des Drehzahleinstellpunkts diesen geänderten Wert als Eingangssignal an das Vorfilter anzulegen. Das Vorfilter bestimmt bei einem Vergleich des Einstellwerts mit der tatsächlichen Drehzahl einen Wert für eine Führungsgröße, welche an die Drehmomentsteuereinheit angelegt ist. Mit einem solchen Vorfilter kann auf besonders einfache und zweckmäßige Weise die gewünschte Änderung des Drehzahleinstellpunkts für die Drehmomentsteuereinheit erreicht werden.

Gemäß einer besonders vorteilhaften Weiterbildung ist ein Bestimmungsmodul für den Vorgabewert vorgesehen, welches dazu ausgebildet ist, in Abhängigkeit von der Schwere des Netzeinbruchs ein Sicherheitsmoment zu bestimmen. Unter einem Sicherheitsmoment wird ein solches Drehmoment verstanden, welches dem noch zur Verfügung stehenden Restmoment im jeweiligen Zustand des Netzes entspricht. Zweckmäßigerweise weist das Bestimmungsmodul ein Kennlinienglied auf, welches vorzugsweise gemäß einer Beziehung [M_{S} = M_{N} - U_{I}/U_{N}] entspricht. Hierbei sind M_{N} das Nenndrehmoment, U_{N} die Nennspannung und U_{I} die tatsächlich noch vorhandene Restspannung. Mit Vorteil umfasst das Bestimmungsmodul einen Minimum-Speicher, welcher das zur jeweils niedrigsten gemessenen Spannung gehörende Sicherheitsmoment speichert und als Ausgabewert des Bestimmungsmoduls bereitstellt. Zweckmäßigerweise ist weiter ein Vorsteuermodul vorgesehen, das dazu ausgebildet ist, während des Netzeinbruchs das Auftreten eines Übermoments oberhalb des Sicherheitsdrehmoments zu erkennen. Das Vorsteuermodul umfasst einen Detektor zum Erkennen des Netzeinbruchs und einen Komparator. Erkennt der Detektor das Auftreten des Netzeinbruchs, so vergleicht der Komparator das Drehmoment des Generators mit dem Sicherheitsdrehmoment und gibt im Falle einer Überschreitung ein Signal aus. Vorzugsweise wirkt das Vorsteuermodul derart mit der Drehmomentsteuereinheit zusammen, dass es während des Netzeinbruchs eine Restmomentvorgabe unter Umgehung der Drehmomentsteuereinheit auf den Generator aufschaltet. Diese Restmomentvorgabe ist zweckmäßigerweise aus dem Sicherheitsmoment berechnet. Mit dem Festlegen des Drehmoments wird vermieden, dass der Generator und der mit ihm zusammen wirkende Umrichter überlastet werden. Die eigentliche Drehmomentsteuereinheit ist nun wirkungslos und kann von dem Initialisator initialisiert werden. Damit sind die Voraussetzungen dafür geschaffen, dass die Drehmomentsteuereinheit am Ende des Spannungseinbruchs sanft einsetzt. Vorzugsweise ist weiter ein Pitch-Schnellverstellmodul vorgesehen, welches mit der Pitch-Steuereinheit zusammenwirkt. Dieses wird von dem Vorsteuermodul derart angesteuert, dass der Einstellwinkel (Pitch) der Rotorblätter mit maximal möglicher Verstellgeschwindigkeit um einen bestimmten Winkel Δv verstellt wird. Dieser Verstellwinkel berechnet sich abhängig von dem Startwinkel der Rotorblätter und der Höhe des Drehmomentsprungs, der sich aus dem Unterschied zwischen dem vorher vorhandenen Moment und dem nunmehr angelegten Restmoment ergibt. Besonders bevorzugt ist es, die Verstellwinkel Δv zu berechnen anhand der Beziehung Δv = f (v₀) x v_{A} x (M₀-M_{R}), wobei v₀ der Startwinkel, v_{A} die generalisierte Blattverstellamplitude, M₀ das Drehmoment vor dem Netzeinbruch und M_{R} das Restmoment sind. Das Verstellen der Blattverstellamplitude wird vorzugsweise im Bereich zwischen 5-10° erfolgen. Bei der Funktion F handelt es sich um eine Funktion, welche die nicht linearen Eigenschaften der Aerodynamik des Rotorblatts berücksichtigt.

Die Erfindung bezieht sich weiter auf eine Windenergieanlage mit einem Turm, einer darauf angeordneten Gondel mit einem Windrotor an einer Stirnseite, der über eine Rotorwelle einen Generator antreibt, welcher mittels eines Umrichters Strom zur Abgabe an ein elektrisches Netz erzeugt, und einer Betriebssteuerung, wobei ferner eine Steuereinrichtung, wie vorstehend beschrieben, vorgesehen ist.

Die Erfindung bezieht sich ferner auf ein entsprechendes Verfahren zum Betreiben einer Windenergieanlage.

Die Erfindung wird nachfolgend in Bezugnahme auf die beigefügte Zeichnung erläutert, in der ein vorteilhaftes Ausführungsbeispiel dargestellt ist. Es zeigen:
- Figur 1: eine schematische Übersichtsdarstellung einer an ein elektrisches Versorgungsnetz angeschlossenen Windenergieanlage mit einem Ausführungsbeispiel der Erfindung;
- Figur 2: ein Blockschaltbild der Windenergieanlage gemäß Figur 1;
- Figur 3: eine schematische Ansicht einer Drehmomentsteuereinheit in der Windenergieanlage;
- Figur 4: Diagramme mit Zeitverläufen einiger Parameter während eines Spannungseinbruchs;
- Figur 5: ein weiteres Diagramm mit Zeitverläufen im vergrößerten Zeitmaßstab; und
- Figur 6: einen Ablaufplan für das Verfahren gemäß dem Ausführungsbeispiel.

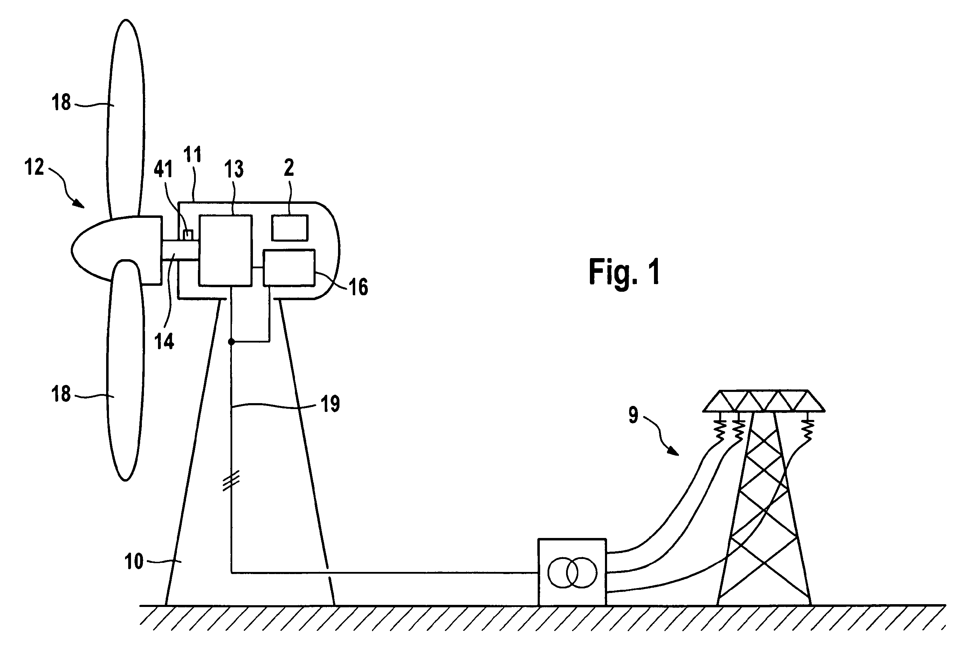

Eine zur Ausführung der Erfindung ausgebildete Windenergieanlage, die in ihrer Gesamtheit mit der Bezugsziffer 1 bezeichnet ist, ist in Figur 1 dargestellt. Sie weist in an sich bekannter Weise eine auf einem Turm 10 in Azimuthrichtung schwenkbar angeordnete Gondel 11 auf. An deren Stirnseite ist ein Windrotor 12 drehbar angeordnet, der über eine Rotorwelle 14 einen Generator 13 antreibt, der vorzugsweise als doppelt gespeiste Asynchronmaschine mit mehrsträngiger Rotor- und Statorwicklung ausgeführt ist. Die Statorwicklung des Generators 13 ist direkt an eine Anschlussleitung 19 der Windenergieanlage 1 angeschlossen. Die Rotorwicklung (nicht dargestellt) ist über einen Umrichter 16 ebenfalls an die Anschlussleitung 19 angeschlossen. Ferner ist eine Betriebssteuerung 2 vorgesehen, die vorzugsweise in der Gondel 11 angeordnet ist.

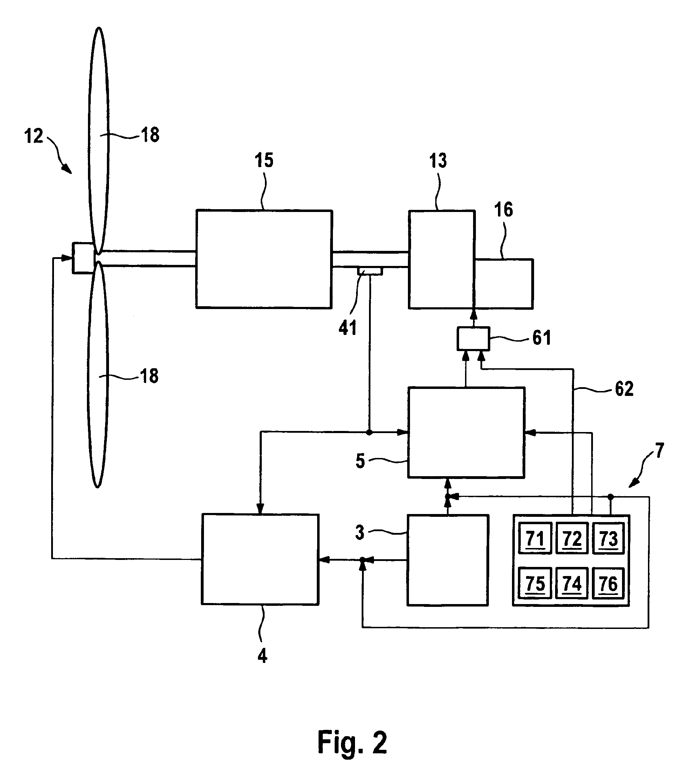

Im normalen Betrieb wird die von dem Windrotor 12 aus dem Wind entnommene mechanische Leistung (Windleistung) über die Rotorwelle 14 und ein optionales Getriebe 15 (siehe Fig. 2) an den Generator 13 übertragen. Dieser erzeugt elektrische Leistung, welche über die Anschlussleitung 19 in das Netz 9 gespeist wird. Die Windenergieanlage 1 umfasst also zwei Hauptsysteme, einmal das mechanische System mit dem Windrotor 12 und zum anderen das elektrische System mit dem Generator 13 als Zentralkomponenten. Für beide Hauptsysteme ist unter der Betriebssteuerung 2 eine eigene Steuereinheit vorgesehen. Sie werden kontrolliert von der Betriebssteuerung mittels eines eigenen Moduls, nämlich einen Arbeitspunktgenerator 3.

Für die Kontrolle des mechanischen Systems mit dem Windrotor 12 ist eine Pitch-Steuereinheit 4 vorgesehen. Sie umfasst einen Drehzahlsensor 41, der an der Rotorwelle 14 angeordnet ist und deren Umdrehungszahl umfasst. Sofern ein Getriebe 15 verwendet wird, ist der Drehzahlsensor bevorzugt auf der "schnellen Welle", also generatorseitig des Getriebes 15, angeordnet. Dieser ist als ein Eingangssignal an die Pitch-Steuerungseinheit 4 angeschlossen. An einem weiteren Eingang der Pitch-Steuerungseinheit 4 ist ein Sollwert für eine Drehzahl von dem Arbeitspunktgenerator 3 angelegt. Die Pitch-Steuerungseinheit 4 berechnet mittels eines Komparators eine Differenz zwischen der angelegten Solldrehzahl und der von dem Drehzahlsensor 41 ermittelten tatsächlichen Drehzahl und bestimmt daraus einen Wert für einen Anstellwinkel (Pitch-Winkel) der Blätter 18 des Rotors. Die Blätter 18 werden dann über einen am Rotor, genauer gesagt in der Rotornabe, angeordneten Pitch-Antrieb (nicht dargestellt) so gedreht, dass der gewünschte Einstellwinkel erreicht wird. Die aus dem Wind entnommene Windleistung ändert sich damit, und damit auch die Drehzahl des Rotors 12. Die Pitch-Steuerungseinheit 4 fungiert damit als eine Drehzahlregelung.

Für das elektrische System ist eine Drehmomentsteuereinheit 5 vorgesehen. Sie erhält als Eingangswert ebenfalls die tatsächliche, von dem Drehzahlsensor 41 gemessene Drehzahl sowie einen von dem Arbeitspunktgenerator 3 bestimmten Drehzahlsollwert. Beide Signale werden an Eingänge angelegt, und es wird eine Differenz daraus gebildet. Die Drehmomentsteuereinheit 5 ermittelt daraus einen Anforderungswert für ein elektrisches Drehmoment (Sollmoment), das an den Generator 13 und seinen Umrichter 16 angelegt wird. Der Umrichter 16 betreibt den Generator 13 mit solchen elektrischen Parametern, dass sich ein entsprechendes elektrisches Drehmoment gemäß der Sollmomentvorgabe einstellt.

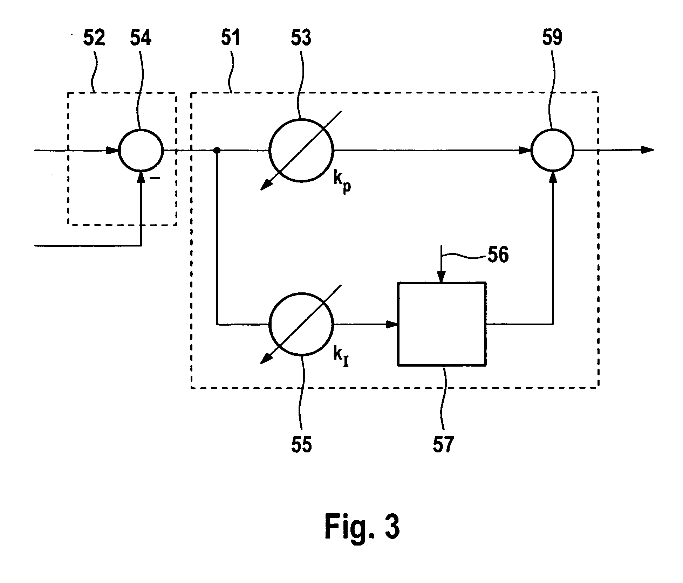

Die Funktionsweise der Drehmomentsteuereinheit 5 wird nachfolgend bezugnehmend auf Figur 3 erläutert. Die Windenergiesteuereinheit 5 umfasst einen Reglerkern 51 und ein Vorfilter 52. Die beiden Eingänge für die tatsächliche Drehzahl sowie den Arbeitspunktgenerator 3 bereitgestellten Sollwert sind an das Vorfilter 52 angelegt. Dieses weist ein Differenzglied 54 auf, und stellt die Differenz aus den beiden Drehzahlsignalen an seinem Ausgang bereit. Dieses Ausgangssignal des Vorfilters 52 ist an einen Eingang des Reglerkerns 51 angelegt. Der Reglerkern 51 ist im dargestellten Ausführungsbeispiel als ein PI-Regler ausgebildet. Er umfasst eine P-Komponente und eine I-Komponente. Die P-Komponente 53 besteht aus einem Proportionalglied 53, welches das angelegte Eingangssignal mit einem einstellbaren Faktor k_{P} multipliziert und an einen Eingang eines Summierers 59 legt. Das I-Glied umfasst ein zweites Proportionalglied 55, welches eine Multiplikation mit einem Koeffizienten k_{I} durchführt. Weiter umfasst es einen Integrator 57, an dessen Eingang der Ausgang des Proportionalglieds 55 angelegt ist. Ein Ausgangssignal des Integrators 57 ist an einen anderen Eingang des Summierers 59 angelegt. Der Integrator weist ferner einen Rücksetzeingang 56 auf. Ist daran ein Signal angelegt, so wird der Integrator auf diesen Wert initialisiert. Mittels der beiden Koeffizienten kp und k_{I} kann das Reglerverhalten des PI-Reglers eingestellt werden. Von dem Summationsglied 59 wird ein Ausgangssignal gebildet, welches an einem Eingang einer Umschalteinheit 61 angelegt ist (s. Fig. 2). An einem anderen Eingang der Umschalteinheit 61 ist eine Signalleitung 62 für ein Festmoment angeschlossen. Der Ausgang des Umschalters 61 bildet den Ausgang der Drehmomentsteuereinheit 5 und ist an den Generator/Umrichter 13 angelegt.

Weiter weist die Windenergieanlage ein Zusatzmodul 7 auf, welches mit der Steuereinheit 2 zusammenwirkt. Das Zusatzmodul 7 umfasst einen Detektor 71 zum Erkennen eines Netzeinbruchs, einen Drehmomentgeber 72, welcher einen Vorgabewert für ein von der Drehmomentsteuereinrichtung 5 einzustellendes Moment bestimmt, und einen Initialisator 73, der auf den Integrator 57 des Reglerkerns 51 wirkt. Die Funktionsweise der Erfindung ist wie folgt: Mittels des Detektors 71 wird bestimmt, ob ein Netzeinbruch vorliegt und wann er wieder beendet ist. Der Drehmomentgeber 72 stellt einen Vorgabewert für das Drehmoment bereit, welches zum Ende des Netzeinbruchs über die Signalleitung 62 auf den Generator 13 aufgeschaltet wird. Weiter löst der Detektor 71 den Initialisator 73 aus, so dass dieser am Ende des Netzeinbruchs den Integrator 57 initialisiert, und zwar auf das von dem Drehmomentgeber 72 bereitgestellte Drehmoment. Weiter wirkt der Initialisator 73 auf die Proportionalglieder 53, 55 ein, und zwar derart, dass bei der Wiederkehr der Netzspannung die Koeffizienten k_{P} und k_{I} auf vorbestimmte abweichende Werte gesetzt werden. Diese Werte werden für eine einstellbare Zeit von beispielsweise 10 Sekunden gehalten. Dieser Zeitraum ist beträchtlich länger als der Zeitraum von etwa einer Sekunde, während der Integrator 57 durch Vorgabe des Drehmoments an dem Initialisierungseingang 56 initialisiert wird.

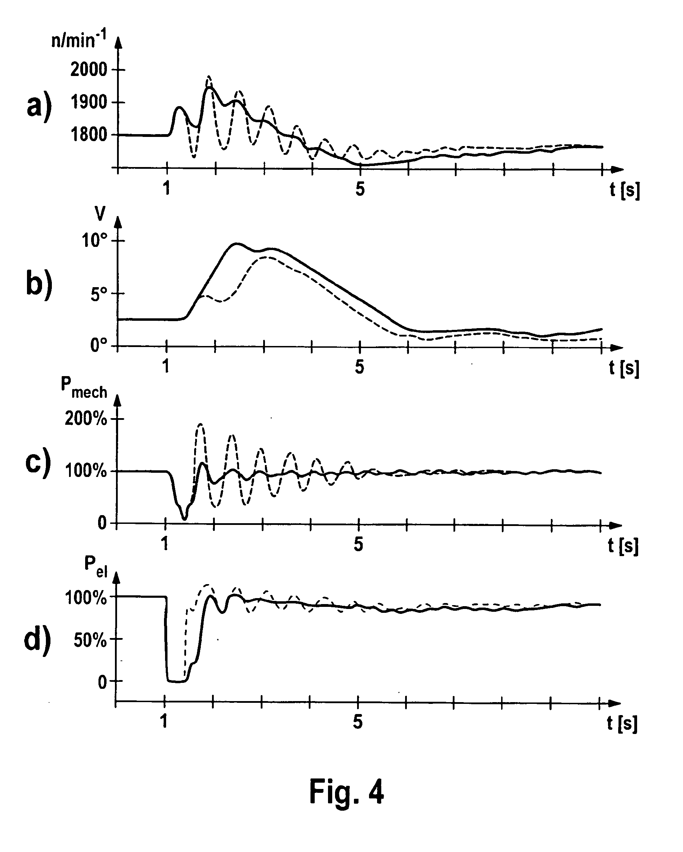

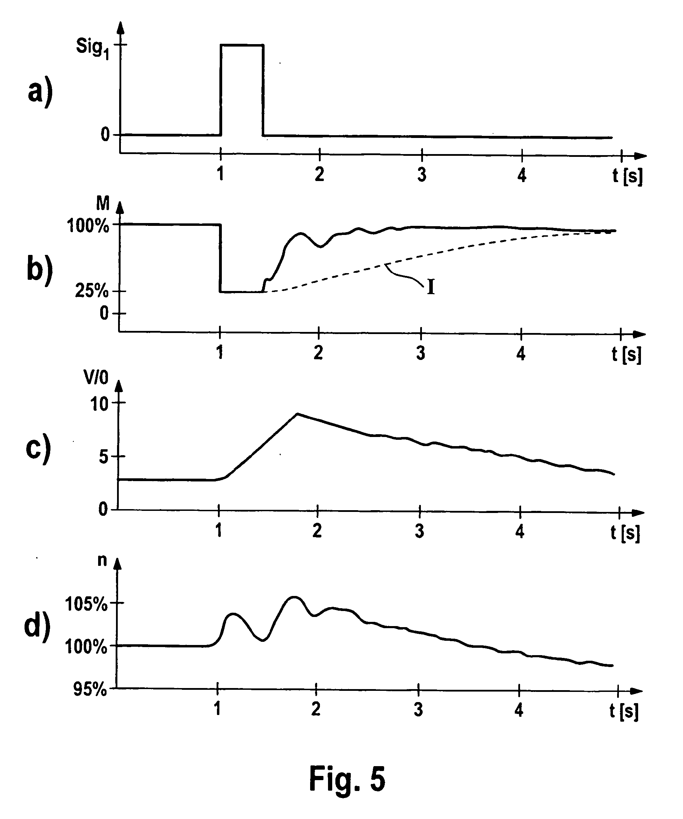

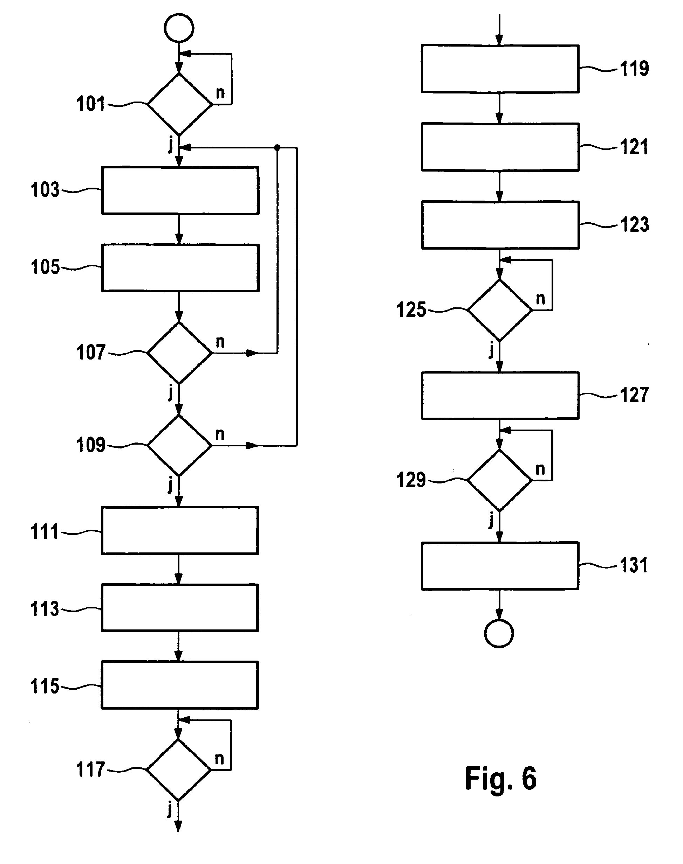

Unter Bezugnahme auf Figur 4 bis 6 wird nunmehr erläutert, wie sich mit einer konventionellen Steuereinrichtung eine Windenergieanlage bei einem Netzeinbruch verhält, wenn der Detektor 71 das Vorhandensein eines Netzeinbruchs ermittelt (Schritt 101). Dazu ist bei der dargestellten Ausführungsform der Detektor 71 als ein Schwellwertschalter ausgebildet, der ein Signal ausgibt, wenn der Wert der Netzspannung unter eine einstellbare Schwelle fällt. Der Netzeinbruch, der zum Zeitpunkt t=1 Sekunde beginnen soll und das dabei entstehende Ausgangssignal des Detektors 71 ist in Figur 5 a dargstellt. Wird ein Netzeinbruch erkannt, ermittelt ein Bestimmungsmodul 74 in Abhängigkeit von der während des Netzeinbruchs gemessenen Netzspannung(Schritt 103) ein Restmoment gemäß der Beziehung M_{R}=M_{N} x U/U_{N} (Schritt 105). Das Bestimmungsmodul 74 umfasst einen Minimum-Detektor, welcher den niedrigsten während des Verlaufs des Netzeinbruchs bestimmten Wert für das Restmoment speichert und als Ausgangssignal bereitstellt (Schritt 107). Der Drehmomentgeber 72 prüft mittels eines Komparators 75, ob ein von der Drehmomentsteuereinheit 5 angefordertes Sollmoment das ermittelte Restmoment überschreitet (Schritt 109). Ist dies der Fall, so wird das Sollmoment auf das Restmoment begrenzt und der Initialisator 73 aktiviert (Schritte 111, 113). Dieser ist dazu ausgebildet, die Umschalteinheit 61 zu betätigen, so dass das als sicher angesehene Restmoment als Sollmoment auf den Generator/Umrichter 13, 16 aufgeschaltet wird. Damit wird vermieden, dass sowohl der Generator 13 als auch der Umrichter 16 während des Netzeinbruchs überlastet werden. Weiter bewirkt der Initialisator 73, dass der Integrator 57 des Reglerkerns 51 initialisiert wird, und zwar ebenfalls auf den Wert des Restmoments. Damit wird erreicht, dass der PI-Reglerkern 51 bei Spannungswiederkehr sanft einsetzt. Schließlich wirkt der Initialisator 73 auf die Pitch-Verstelleinheit 4 ein, und zwar in der Weise, dass die Rotorblätter 18 mit möglichst hoher Verstellgeschwindigkeit um einen Winkel Δv verstellt werden (Schritt 115). Dieser Verstellwinkel Δv berechnet sich in Abhängigkeit von dem Ausgangswinkel v₀ und der Drehmomentdifferenz zwischen dem bei Netzeinbruch angelegten Drehmoment M₀ und dem berechneten Restmoment gemäß folgender Beziehung: Δv=f (v₀) x v_{A} x (M₀-M_{R}), wobei v_{A} die generalisierte Blattverstellamplitude ist und bevorzugt im Bereich zwischen 5 und 10° liegt und die Funktion f(v₀) eine nicht lineare, die Aerodynamik des Rotorblatts 18 berücksichtigende Funktion ist, die für das jeweilige Rotorblatt 18 empirisch bestimmt sein kann.

Kehrt zum Ende des Netzeinbruchs bei t=1,5 s die Netzspannung wieder (Schritt 117), so wird das Ausgangssignal des Detektors 71 vor Überschreiten der Schwellspannung zurückgesetzt. Dabei wird wieder der Initialisator 73 aktiviert, der einen geänderten Einstellpunkt für die Drehzahl bestimmt(Schritt 119). Dies kann durch eine eigene Berechnung erfolgen oder durch Übernahme eines Signals von der übergeordneten Steuerung 2. Der Einstellwert wird zweckmäßigerweise so gewählt, dass eine höhere Drehzahl bestimmt wird als sie dem Betriebszustand vor Netzeinbruch entspricht; alternativ kann auch die Nenndrehzahl als Einstellwert vorgesehen sein. Dieser Einstellwert wird von einem Überreitmodul 76 auf den Eingang für den Einstellwert des Vorfilters 52 aufgeschaltet. Damit wird vermieden, dass die Drehmomentsteuereinheit 5, und zwar insbesondere deren Reglerkern 51 sofort nach Wiederkehr der Spannung in die Sättigung fährt. Zweckmäßigerweise wird diese Veränderung des Einstellwerts für die Drehzahl für eine vorwählbare Zeit von beispielsweise einer Sekunde aufrechterhalten. Weiterhin bewirkt der Initialisator 73 am Ende des Netzeinbruchs eine Veränderung der Verstärkungsfaktoren k_{P} und k_{I} der Proportionalglieder 53, 55 des Reglerkerns 51 (Schritt 121). Deren Werte werden so geändert, dass der Wert k_{I} erhöht wird und der Wert k_{P} im Verhältnis dazu vermindert wird. Damit wird das Gewicht des I-Glieds in dem Reglerkern 51 verstärkt, wodurch - wie die Erfindung erkannt hat - ein günstigeres Einschwingen des Reglers erzielt werden kann. Das von der Drehmomentsteuereinheit 5 bestimmte Moment ist in Figur 5 b dargestellt, wobei mit der gestrichelten Linie der Ausgangswert des I-Glieds verdeutlicht ist. Man erkennt den harmonischen und nahezu überschwingerfreien, den Ausgangswert nicht überschreitenden Wiederanstieg des Moments. Auch diese Veränderung der Verstärkungsfaktoren k_{P}, k_{I} ist nur temporär, beispielsweise für eine Zeitdauer von 10 Sekunden. Weiter wird bei Netzspannungswiederkehr der Integrator 53 wieder initialisiert, und zwar auf dem Wert des Restmoments. Nach Ablauf einer vorbestimmten ersten Zeitdauer (Schritt 125), beispielsweise 1 Sekunde, wird der Initialisator wieder freigegeben (Schritt 127). Entsprechend werden nach Ablauf einer zweiten Zeitdauer (Schritt 129), beispielsweise 10 Sekunden, die Koeffizienten und der Drehzahlsollwert auf den Ursprungswert zurückgesetzt (Schritt 131). Damit wird der Normalbetrieb wieder aufgenommen.

Mit der Kombination dieser Maßnahmen wird vermieden, dass die Drehmoment- bzw. Pitch-Steuereinheit 4, 5 bei Wiederkehr der Netzspannung in die Sättigung fährt. Die Regelung kann damit voll ihre Wirkung entfalten, und erreicht somit einen sanfteren und besser kontrollierten Wiederanstieg der Leistung am Ende des Netzeinbruchs, so dass es nicht zu schädlichen Schwingungen im Triebstrang kommt. Dieses ist in Figur 4 verdeutlicht. In Figur 4 a ist die Generatordrehzahl, in Figur 4 b der Blattwinkel, in Figur 4 c die Triebstrangbelastungen und in Figur 4 d die elektrische Leistung dargestellt. Zum Vergleich ist mit einer gestrichelten Linie der jeweilige Verlauf ohne die vorliegende Erfindung darstellt. Man erkennt deutlich, dass die erheblichen Triebstrangbelastungen (Figur 4 c), die ohne die Erfindung Werte von bis zu 230 % des Nennmoments betragen können, stark gedämpft sind und nur noch Überschreitungen von etwa 30 % auftreten. Diese können problemlos aufgenommen werden. Die dabei auftretenden Drehzahlsschwingungen sind minimal. Man erkennt deutlich in Figur 4 a die von der Erfindung bewirkte Vergleichmäßigung der Generatordrehzahl. Deren Schwingungen sind stark vermindert und weisen eine Amplitude auf, die nur noch etwa 1/4 derjenigen entspricht, wie sie ohne die Erfindung auftritt. Die elektrische Leistung (Figur 4 d) steigt entsprechend langsamer an, erreicht aber etwa 0,5 Sekunden nach Netzspannungswiederkehr bereits wieder den Ausgangswert.

## Patentansprüche

1. Windenergieanlagensteuereinrichtung mit einem Windrotor (12) und einem Generator (13), der von dem Windrotor (12) angetrieben ist, die eine Drehmomentsteuereinheit (5) für ein Drehmoment des Generators (13) aufweist,
**dadurch gekennzeichnet, dass**
eine Zusatzsteuerung (7) vorgesehen ist, die einen Detektor (71) zum Erkennen eines Netzeinbruchs und dessen Ende,
einen Restmomentgeber (72), welcher einen Vorgabewert für ein Drehmoment des Generators (13) nach Erkennen des Netzeinbruchs bereitstellt, und
einen Initialisator (73) umfasst, welcher eine Komponente der Drehmomentsteuereinheit (5) nach Erkennen des Netzeinbruchs auf den Vorgabewert initialisiert.

2. Windenergieanlagensteuereinrichtung nach Anspruch 1,
**dadurch gekennzeichnet, dass**
die Komponente der Drehmomentsteuereinheit (5) ein I-Glied (57)ist.

3. Windenergieanlagensteuereinrichtung nach Anspruch 1 oder 2,
**dadurch gekennzeichnet, dass**
der Initialisator (73) einen Gewichtungsfaktor der Komponente in der Drehmomentsteuereinheit (4) verändert.

4. Windenergieanlagensteuereinrichtung nach Anspruch 3,
**dadurch gekennzeichnet, dass**
der Initialisator (73) mindestens einen weiteren Gewichtungsfaktor einer anderen Komponente verändert, und zwar vorzugsweise gegensinnig.

5. Windenergieanlagensteuereinrichtung nach Anspruch 3 oder 4,
**dadurch gekennzeichnet, dass**
die Veränderung der Gewichtungsfaktoren temporär über eine einstellbare Zeitdauer erfolgt.

6. Windenergieanlagensteuereinrichtung nach einem der vorangehenden Ansprüche,
**dadurch gekennzeichnet, dass**
ein Bestimmungsmodul (74) für einen Vorgabewert vorgesehen ist, das dazu ausgebildet ist, in Abhängigkeit von der Schwere des Netzeinbruchs ein Sicherheitsmoment (M_{R}) zu bestimmen.

7. Windenergieanlagensteuereinrichtung nach Anspruch 6,
**dadurch gekennzeichnet, dass**
das Bestimmungsmodul (74) ein Kennlinienglied umfasst.

8. Windenergieanlagensteuereinrichtung nach einem der vorangehenden Ansprüche,
**dadurch gekennzeichnet, dass**
die Zusatzsteuerung (7) ein Überreitmodul (76) aufweist, das einen geänderten Einstellpunkt für eine Drehzahl an die Pitch-Steuereinheit (4) und/oder Drehmomentsteuereinheit (5) anlegt.

9. Windenergieanlagensteuereinrichtung nach Anspruch 8,
**dadurch gekennzeichnet, dass**
die Einstellpunkte für die Pitch-Steuereinheit (4) und die Drehmomentsteuereinheit (5) unterschiedlich sind.

10. Windenergieanlagensteuereinrichtung nach Anspruch 8 oder 9,
**dadurch gekennzeichnet, dass**
der geänderte Drehzahleinstellpunkt an ein Vorfilter (52) für einen Reglerkern (51) der Drehmomentsteuereinheit (5) angelegt ist.

11. Windenergieanlagensteuereinrichtung nach einem der vorangehenden Ansprüche,
**dadurch gekennzeichnet, dass**
die Zusatzsteuerung (7) weiter ein Vorsteuermodul aufweist, das dazu ausgebildet ist, den Netzeinbruch und ein Auftreten eines Übermoments zu erkennen.

12. Windenergieanlagensteuereinrichtung nach Anspruch 11,
**dadurch gekennzeichnet, dass**
das Vorsteuermodul auf eine Umschalteinrichtung (61) einwirkt, um während des Netzeinbruchs den Generator (13) mit einem Sollmoment zu beaufschlagen.

13. Windenergieanlagensteuereinrichtung nach Anspruch 11 oder 12,
**dadurch gekennzeichnet, dass**
das Vorsteuermodul mit dem Initialisator (73) derart zusammenwirkt, um das I-Glied (57) der Drehmomentsteuereinheit (5) zu initialisieren.

14. Windenergieanlagensteuereinrichtung nach einem der Ansprüche 11 bis 13,
**dadurch gekennzeichnet, dass**
die Zusatzsteuerung weiter ein Pitch-Schnellverstellmodul aufweist, welches von dem Vorsteuermodul angesteuert wird.

15. Windenergieanlage mit einem Turm (10), einer darauf angeordneten Gondel (11) mit einem Windrotor (12) an einer Stirnseite und einem davon angetriebenen Generator (13) zur Erzeugung und Einspeisung elektrischer Energie in ein Netz (9),
**dadurch gekennzeichnet, dass**
eine Steuereinrichtung nach einem der Ansprüche 1 bis 14 verwendet wird.

16. Verfahren zum Betreiben einer Windenergieanlage mit einem von einem Windrotor (12) angetriebenen Generator (13) zur Erzeugung und Einspeisung elektrischer Energie in ein Netz (9) und einer Steuereinrichtung mit einer Drehmoment-Steuereinheit (5),
**gekennzeichnet durch**
Erkennen eines Netzeinbruchs und einer Wiederkehr der Netzspannung,
Bestimmen eines Vorgabewerts für ein Drehmoment des Generators (13) nach Erkennen des Netzeinbruchs, und
Initialisieren einer Komponente der Drehmomentsteuereinheit (5) nach Erkennen des Netzeinbruchs auf den Vorgabewert.

17. Verfahren nach Anspruch 16,
**dadurch gekennzeichnet, dass**
die Steuereinrichtung nach einem der Ansprüche 1 bis 14 verwendet wird.

## Claims

1. Wind energy installation control device having a wind rotor (12) and a generator (13) which is driven by the wind rotor (12), which wind energy installation control device has a torque control unit (5) for a torque of the generator (13)
**characterized in that**
an additional control system (7) is provided which has a detector (71) for identification of a grid dip and of its end,
a residual torque transmitter (72), which provides a preset value for a torque of the generator (13) after identification of the grid dip, and
an initializer (73), which initializes a component of the torque control unit (5) at the preset value, after identification of the grid dip.

2. Wind energy installation control device as claimed in Claim 1,
**characterized in that**
the component of the torque control unit (5) is an I-element (57).

3. Wind energy installation control device as claimed in Claim 1 or 2,
**characterized in that**
the initializer (73) varies a weighting factor of the component in the torque control unit (4).

4. Wind energy installation control device as claimed in Claim 3,
**characterized in that**
the initializer (73) varies at least one further weighting factor of another component, to be precise preferably in the opposite sense.

5. Wind energy installation control device as claimed in Claim 3 or 4,
**characterized in that**
the weighting factors are varied temporarily over an adjustable time period.

6. Wind energy installation control device as claimed in one of the preceding claims,
**characterized in that**
a determination module (74) is provided for a preset value and is designed to determine a safe torque (M_{R}) as a function of the severity of the grid dip.

7. Wind energy installation control device as claimed in Claim 6,
**characterized in that**
the determination module (74) has a characteristic element.

8. Wind energy installation control device as claimed in one of the preceding claims,
**characterized in that**
the additional control system (7) has an override module (76), which applies an amended setting point for a rotation speed to the pitch control unit (4) and/or torque control unit (5).

9. Wind energy installation control device as claimed in Claim 8,
**characterized in that**
the setting points for the pitch control unit (4) and for the torque control unit (5) are different.

10. Wind energy installation control device as claimed in Claim 8 or 9,
**characterized in that**
the amended rotation-speed setting point is applied to an input filter (52) for a regulated core (51) of the torque control unit (5).

11. Wind energy installation control device as claimed in one of the preceding claims,
**characterized in that**
the additional control system (7) also has a pilot control module which is designed to identify the grid dip and the occurrence of an excessive torque.

12. Wind energy installation control device as claimed in Claim 11,
**characterized in that**
the pilot control module acts on a switching device (61) in order to apply a nominal torque to the generator (13) during the grid dip.

13. Wind energy installation control device as claimed in Claim 11 or 12,
**characterized in that**
the pilot control module interacts with the initializer (73) in order to initialize the I-element (57) of the torque control unit (5).

14. Wind energy installation control device as claimed in one of Claims 11 to 13,
**characterized in that**
the additional control system furthermore has a quick-acting pitch adjustment module, which is controlled by the pilot control module.

15. Wind energy installation having a tower (10), a pod (11) which is arranged thereon and has a wind rotor (12) on one end face and a generator (13), which is driven thereby, for producing and feeding electrical energy into a grid (9),
**characterized in that**
a control device as claimed in one of Claims 1 to 14 is used.

16. Method for operation of a wind energy installation having a generator (13), which is driven by a wind rotor (12), for producing and feeding electrical energy into a grid (9), and has a control device with a torque control unit (5),
**characterized by**
identification of a grid dip and of return of the grid voltage,
determination of a preset value for a torque of the generator (13) after identification of the grid dip, and
initialization of a component in the torque control unit (5) at the preset value after identification of the grid dip.

17. Method as claimed in Claim 16,
**characterized in that**
the control device as claimed in one of Claims 1 to 14 is used.

## Revendications

1. Dispositif de commande d'éolienne comportant un rotor éolien (12) et un générateur (13) actionné par le rotor éolien (12), lequel dispositif comporte une unité de commande de couple (5) pour un couple de rotation du générateur (13),
**caractérisé en ce qu'**il est prévu une commande supplémentaire (7) qui comporte
un détecteur (71) pour détecter une panne de secteur et la fin de celle-ci,
un capteur de couple résiduel (72) mettant à disposition une valeur référentielle pour un couple de rotation du générateur (13) après la détection de la panne de secteur, et
un initialisateur (73) initialisant à la valeur référentielle une composante de l'unité de commande de couple (5) après la détection de la panne de secteur.

2. Dispositif de commande d'éolienne selon la revendication 1, **caractérisé en ce que** la composante de l'unité de commande de couple (5) est un élément régulateur intégral (57).

3. Dispositif de commande d'éolienne selon la revendication 1 ou 2, **caractérisé en ce que** l'initialisateur (73) modifie un facteur de pondération de la composante dans l'unité de commande de couple (4).

4. Dispositif de commande d'éolienne selon la revendication 3, **caractérisé en ce que** l'initialisateur (73) modifie au moins un autre facteur de pondération d'une autre composante, à savoir de préférence en sens opposé.

5. Dispositif de commande d'éolienne selon la revendication 3 ou 4, **caractérisé en ce que** la modification des facteurs de pondération est effectuée temporairement pendant un intervalle de temps réglable.

6. Dispositif de commande d'éolienne selon l'une quelconque des revendications précédentes, **caractérisé en ce qu'**il est prévu un module de détermination (74) pour une valeur référentielle, lequel est réalisé pour déterminer un couple de sécurité (M_{R}) en fonction de l'importance de la panne de secteur.

7. Dispositif de commande d'éolienne selon la revendication 6, **caractérisé en ce que** le module de détermination (74) comprend un élément à courbes caractéristiques.

8. Dispositif de commande d'éolienne selon l'une quelconque des revendications précédentes, **caractérisé en ce que** la commande supplémentaire (7) comporte un module d'asservissement (76), qui applique à l'unité de commande de pas (4) et/ou à l'unité de commande de couple (5) un point de réglage modifié pour une vitesse de rotation.

9. Dispositif de commande d'éolienne selon la revendication 8, **caractérisé en ce que** les points de réglage sont différents pour l'unité de commande de pas (4) et l'unité de commande de couple (5).

10. Dispositif de commande d'éolienne selon la revendication 8 ou 9, **caractérisé en ce que** le point de réglage modifié de la vitesse de rotation est appliqué à un filtre préliminaire (52) pour un noyau de régulateur (51) de l'unité de commande de couple (5).

11. Dispositif de commande d'éolienne selon l'une quelconque des revendications précédentes, **caractérisé en ce que** la commande supplémentaire (7) comporte, en outre, un module pilote qui est réalisé pour détecter la panne de secteur et l'apparition d'un couple excessif.

12. Dispositif de commande d'éolienne selon la revendication 11, **caractérisé en ce que** le module pilote agit sur un dispositif de commutation (61) pour solliciter le générateur (13) avec un couple théorique pendant la panne de secteur.

13. Dispositif de commande d'éolienne selon la revendication 11 ou 12, **caractérisé en ce que** le module pilote coopère avec l'initialisateur (73) de manière à initialiser l'élément régulateur intégral (57) de l'unité de commande de couple (5).

14. Dispositif de commande d'éolienne selon l'une quelconque des revendications 11 à 13, **caractérisé en ce que** la commande supplémentaire comporte, en outre, un module de réglage rapide de pas, qui est commandé par le module pilote.

15. Éolienne, comportant un mât (10), une nacelle (11) montée sur celui-ci et munie d'un rotor éolien (12) sur une face frontale et d'un générateur (13), actionné par ce dernier, pour générer de l'énergie électrique et l'injecter dans un réseau (9),
**caractérisée en ce que** l'on utilise un dispositif de commande selon l'une quelconque des revendications 1 à 14.

16. Procédé pour le fonctionnement d'une éolienne comportant un générateur (13), actionné par un rotor éolien (12), pour générer de l'énergie électrique et l'injecter dans un réseau (9), et un dispositif de commande avec une unité de commande de couple (5),
**caractérisé par**
la détection d'une panne de secteur et d'un rétablissement de la tension du secteur,
la détermination d'une valeur référentielle pour un couple de rotation du générateur (13) après la détection de la panne de secteur, et
l'initialisation d'une composante de l'unité de commande de couple (5) après la détection de la panne de secteur.

17. Procédé selon la revendication 16, **caractérisé en ce que** l'on utilise le dispositif de commande selon l'une quelconque des revendications 1 à 14.
